# EUROPEAN PATENT SPECIFICATION

(11) **EP 2 212 952 B1**
(45) Date of publication and mention of the grant of the patent: **17.09.2014**
(21) Application number: 08837996.1
(22) Date of filing: 06.10.2008
(51) Int. Cl.: H01M 4/86, H01M 4/88, H01M 4/92, H01M 8/10

(54) **ELECTRODE FOR FUEL CELL AND METHOD OF PREPARING THE SAME AND MEMBRANE ELECTRODE ASSEMBLY AND FUEL CELL COMPRISING THE SAME**
ELEKTRODE FÜR EINE BRENNSTOFFZELLE UND VERFAHREN ZUR HERSTELLUNG DIESER UND MEMBRANELEKTRODENBAUGRUPPE UND BRENNSTOFFZELLE DAMIT
ÉLECTRODE POUR PILE À COMBUSTIBLE ET PROCÉDÉ POUR LA PRÉPARER ET ENSEMBLE MEMBRANE-ÉLECTRODES ET PILE À COMBUSTIBLE LA CONTENANT

(30) Priority: 10.10.2007 KR 20070102054
(43) Date of publication of application: 04.08.2010
(73) Proprietor: LG CHEM, LTD., Seoul 150-721 (KR)
(72) Inventor: KIM, Hyuk, Daejon 305-380 (KR); LEE, Won-Ho, Daejeon 302-741 (KR); LEE, Chang-Song, Yuseong-gu, Daejon, 305-380 (KR); JEONG, Seong-Uk, Seoul 132-030 (KR); LEE, Sang-Hyun, Namyangju-si Gyeonggi-do 472-741 (KR)
(74) Representative: Goddar, Heinz J.
(86) International application number: PCT/KR2008/005851
(87) International publication number: WO 2009/048241

(56) References cited:
- JP-A- 2005 267 916
- JP-A- 2007 080 726
- KR-A- 20040 070 164
- KR-A- 20060 086 642
- US-A- 6 153 323
- US-A1- 2004 038 808
- US-A1- 2004 038 808
- US-A1- 2005 163 920
- US-A1- 2005 233 183
- US-A1- 2007 213 203

## Description

### [Technical Field]

The present invention relates to an electrode for a fuel cell, a method of preparing the same, and a membrane electrode assembly and a fuel cell comprising the same, and in particular, to an electrode for a fuel cell having improved ion conductivity, reaction surface area and durability, a method of preparing the same, and a membrane electrode assembly and a fuel cell comprising the same.

### [Background Art]

Recently, as depletion of conventional energy resources such as oil or coal is foreseen, interest in an alternative energy is increasing. A fuel cell is one of the alternative energy, and advantageously has a high efficiency, does not emit pollutants of NO_{X} and SO_{X} and uses a fuel that is abundant in quantity, and therefore, the fuel cell attracts public attention.

The fuel cell is a power generation system that converts chemical energy of a fuel and an oxidant to electrical energy, and typically hydrogen and hydrocarbon, for example methanol or butane is used as a fuel, and oxygen is used as an oxidant.

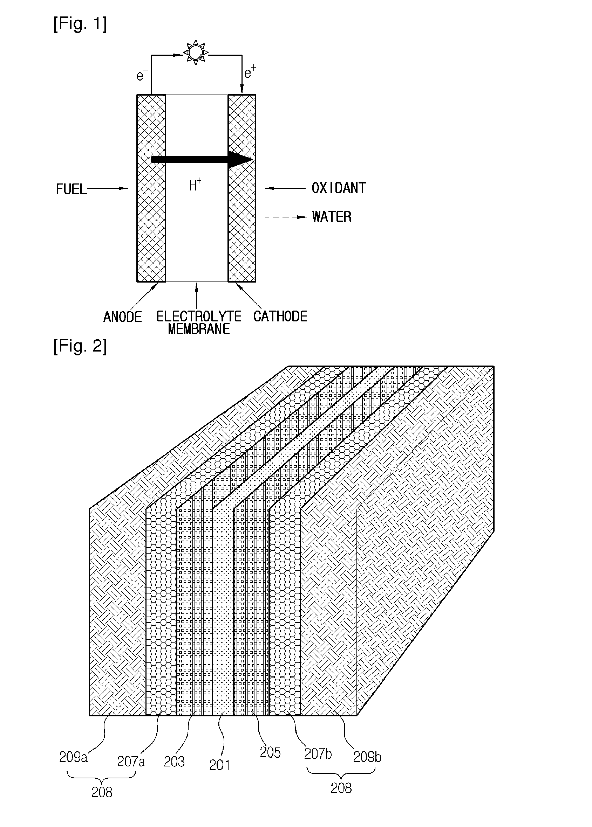

In the fuel cell, a membrane electrode assembly (MEA) is the basic unit for generating electricity, and includes an electrolyte membrane and anode and cathode electrodes formed at opposite sides of the electrolyte membrane. FIG. 1 illustrates the principle for generating electricity of a fuel cell, and Chemical Figure 1 represents a reaction formula of a fuel cell in the case that hydrogen is used as a fuel. Referring to FIG. 1 and Chemical Figure 1, an oxidation reaction of a fuel occurs at an anode electrode to generate hydrogen ions and electrons, and the hydrogen ions move to a cathode electrode through an electrolyte membrane. The hydrogen ions transmitted through the electrolyte membrane and the electrons react with oxygen (oxidant) at the cathode electrode to generate water. This reaction causes the electrons to move to an external circuit.

[Chemistry Figure 1] Anode electrode: H₂ → 2H⁺+2e⁻ cathode electrode: 1/2O₂+2H⁺+2e⁻ → H₂O Reaction formula: H₂+1/2O₂ → H₂O

FIG. 2 illustrates a general configuration of a membrane electrode assembly for a fuel cell. Referring to FIG. 2, a membrane electrode assembly for a fuel cell includes an electrolyte membrane, and an anode electrode and a cathode electrode located at the opposite sides of the electrolyte membrane. The anode and cathode electrodes each includes a catalyst layer and a gas diffusion layer. The gas diffusion layer includes an electrode substrate and a microporous layer formed on the electrode substrate.

A catalyst layer of a conventional fuel cell membrane electrode assembly is coated with one kind of ink including a catalyst and an ionomer to form an electrode layer that is the same in the XY direction. The electrolyte membrane is contacted with the electrode layer in a plane-to-plane relationship, and a reaction occurs to an interface between the electrolyte membrane and the electrode layer to generate a potential difference. Therefore, it is important to increase a reaction surface area between the electrolyte membrane and the electrode layer so as to improve the performance of a fuel cell.

Conventionally, attempt was made to undulate the surface of the electrolyte membrane so as to increase a reaction surface area between the electrolyte membrane and the electrode layer and improve bondability of the electrode layer. However, this may cause stress on the electrolyte membrane, needs a difficult process and results in failed connection of the entire electrode layer.

US 2005/233183 A1 discloses an electrode for a fuel cell which is interposed between an electrolyte membrane and a separator having a fluid channel, the electrode comprising: a catalyst layer contacted with the electrolyte membrane; and a gas diffusion layer contacted with the separator, wherein the catalyst layer includes a catalyst portion containing a plurality of first catalyst particles dispersed in an ionomer binder resin; and an ionomer portion containing a plurality of second catalyst particles dispersed in an ionomer binder resin and having a lower concentration of catalyst particles than the catalyst portion, and wherein the ionomer portion has a shape of a wall or pillars in the catalyst portion.

### [Disclosure]

### [Technical Problem]

An object of the present invention is to provide an electrode for a fuel cell having excellent ion conductivity, improved reaction surface area and increased durability resulted from improved contact between an electrolyte membrane and an electrode layer.

### [Technical Solution]

To solve the above-mentioned problems, the present invention provides an electrode for a fuel cell according to claim 1. The electrode for a fuel cell according to the present invention includes separately the ionomer portion in the catalyst layer to improve ion conductivity and considerably increase a reaction surface area, thereby improving the performance of the fuel cell.

Each of the first catalyst particles and the second catalyst particles of the present invention may be metal catalyst particles or metal catalyst particles on a carbon-based support used typically in the art.

And, the present invention provides a method of preparing an electrode for a fuel cell according to claim 3.

Each of the catalyst portion forming ink and the ionomer portion forming ink may include a metal catalyst or a metal catalyst on a carbon-based support; a polymer ionomer; and a solvent.

In the method of preparing an electrode for a fuel cell according to the present invention, spray of inkdrops may be performed while heating according to necessity.

The above-mentioned electrode of the present invention may be used in a membrane electrode assembly and a fuel cell according to claims 9 and 10, respectively.

Preferred embodiments are disclosed in the subclaims.

### [Description of Drawings]

FIG. 1 is a schematic view illustrating the principle for generating electricity of a fuel cell.
FIG. 2 is a view illustrating schematically a general configuration of a membrane electrode assembly for a fuel cell.
FIG. 3 is a view illustrating schematically spray of a catalyst portion forming ink and an ionomer portion forming ink according to the present invention.
FIG. 4 is a plane view illustrating schematically that a catalyst portion forming ink and an ionomer portion forming ink are sprayed onto an electrolyte membrane or a gas diffusion layer to form a plurality of ionomer pillars in a catalyst portion not according to the present invention.
FIG. 5 is a plane view illustrating schematically that a catalyst portion forming ink and an ionomer portion forming ink are sprayed onto an electrolyte membrane or a gas diffusion layer to form a wall in a catalyst portion according to the present invention.
FIG. 6 is a cross-sectional view illustrating schematically that a catalyst portion forming ink and an ionomer portion forming ink are sprayed onto an electrolyte membrane or a gas diffusion layer to form a catalyst portion and an ionomer portion.
FIG. 7 is a view illustrating schematically a fuel cell according to an embodiment of the present invention.

### [Mode for Invention]

Hereinafter, an electrode for a fuel cell of the present invention will be described in detail according to its preparing method. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation. Therefore, the description proposed herein is just a preferable example for the purpose of illustrations only, not intended to limit the scope of the invention.

First, a catalyst portion forming ink and an ionomer portion forming ink having a zero concentration of catalyst particles are prepared (S1).

The catalyst portion forming ink according to the present invention may be a catalyst portion forming ink used in the art. For example, the catalyst portion forming ink may include a metal catalyst or a metal catalyst on a carbon-based support as first catalyst particles; a polymer ionomer; and a solvent.

Typically, the metal catalyst may be at least one selected from the group consisting of platinum, ruthenium, osmium, platinum-ruthenium alloy, platinum-osmium alloy, platinum-palladium alloy and platinum-transition metal alloy, however the present invention is not limited in this regard.

The carbon-based support may be a carbon-based material, preferably at least one selected from the group consisting of graphite, carbon black, acetylene black, denka black, ketjen black, activated carbon, mesoporous carbon, carbon nanotube, carbon nano fiber, carbon nano horn, carbon nano ring, carbon nano wire, fullerene (C60) and SuperP.

Typically, the polymer ionomer may be a nafion ionomer or a sulfonated polymer such as sulfonated polytrifluorostyrene.

Preferably, the solvent may be at least on selected from the group consisting of water, butanol, isopropanol, methanol, ethanol, n-propanol, n-butylene acetate and ethylene glycol.

The ionomer portion forming ink according to the present invention may be prepared in the same way as the catalyst portion forming ink except a zero concentration of catalyst particles. For example, the ionomer portion forming ink includes a polymer ionomer; and a solvent.

After the above-mentioned inks are prepared, first catalyst portion forming inkdrops and first ionomer portion forming inkdrops are sprayed onto preset locations of an electrolyte membrane or a gas diffusion layer to form a layer (S2).

After the first catalyst portion forming inkdrops and the first ionomer portion forming inkdrops are sprayed, catalyst portion forming inkdrops and ionomer portion forming inkdrops are sprayed onto the locations where the first catalyst portion forming inkdrops and the first ionomer portion forming inkdrops are sprayed. To avoid confusion with the first catalyst portion forming inkdrops and the first ionomer portion forming inkdrops, the subsequently sprayed catalyst portion forming inkdrops and ionomer portion forming inkdrops are referred to as second catalyst portion forming inkdrops and second ionomer portion forming inkdrops, respectively.

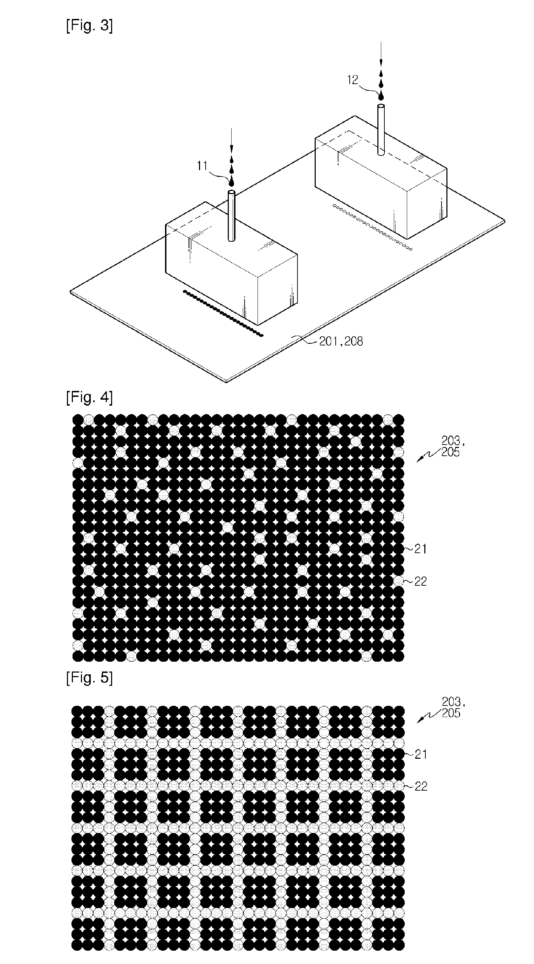

As shown in FIG. 3, a catalyst portion forming ink 11 and an ionomer portion forming ink 12 are sprayed onto an electrolyte membrane 201 or a gas diffusion layer 208. An ink jet method uses the related software to adjust a spray location of inkdrops very precisely, and thus can spray individual inkdrops of the catalyst portion forming ink 11 and the ionomer portion forming ink 12 onto preset locations of the electrolyte membrane 201 or the gas diffusion layer 208.

After the first catalyst portion forming inkdrops and the first ionomer portion forming inkdrops are sprayed onto preset locations of the electrolyte membrane or the gas diffusion layer, as shown in FIGs. 4 an 5, a layer including a catalyst portion 21 and an ionomer portion 22 that are made of the first catalyst portion forming inkdrops and the first ionomer portion forming inkdrops, respectively, is formed on the electrolyte membrane or the gas diffusion layer.

In this case, a location where ionomer portion forming inkdrops are initially sprayed onto the electrolyte membrane or the gas diffusion layer becomes a location of an ionomer wall or pillar to be formed. Therefore, ordinary persons skilled in the art can determine appropriately spray locations of the catalyst portion forming inkdrops and the ionomer portion forming inkdrops according to necessity. For example, as shown in FIG. 4 (not according to the invention), spray locations of the ionomer portion forming inkdrops may be scattered on the electrolyte membrane or the gas diffusion layer.

In alternative embodiments, spray locations of the ionomer portion forming inkdrops may be set to form an ionomer wall in a grid pattern, and in this case, the catalyst portion forming inkdrops are located between grids. The ionomer wall of a grid pattern is shown in FIG. 5.

Next, second catalyst portion forming inkdrops and second ionomer portion forming inkdrops are stacked at the locations where the first catalyst portion forming inkdrops and the first ionomer portion forming inkdrops were sprayed, to form a catalyst portion and an ionomer portion, respectively. The second catalyst portion forming inkdrops and the second ionomer portion forming inkdrops are sprayed repeatedly in an ink jet method to form a catalyst layer such that the ionomer portion has a shape of a wall or plural pillars in the catalyst portion (S3).

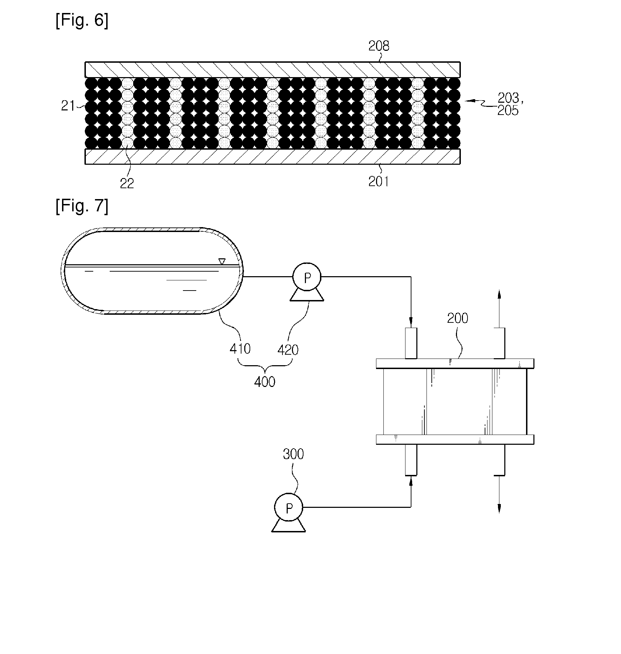

As mentioned above, the ink jet method can adjust a spray location of inkdrops, and thus catalyst portion forming inkdrops and ionomer portion forming inkdrops can be sprayed onto locations where catalyst portion forming inkdrops and ionomer portion forming inkdrops were sprayed in the previous step. According to the spray method, catalyst portion forming inkdrops can be sprayed repeatedly onto a location where catalyst portion forming inkdrops were sprayed in the previous step, and ionomer portion forming inkdrops can be sprayed repeatedly onto a location where ionomer portion forming inkdrops were sprayed in the previous step. As a result, after inks for forming an electrode are sprayed, catalyst layers 203 and 205 of a preset thickness can be formed, in which an ionomer wall or ionomer pillars 22 are formed in a catalyst portion 21, as shown in FIG. 6.

In the electrode for a fuel cell according to the present invention, an ionomer wall or plural ionomer pillars separately exist in a catalyst layer of an electrode to improve ion conductivity in the electrode and considerably increase a reaction surface area between a catalyst, an ionomer and reaction gas, thereby improving the performance of a fuel cell, which can be sufficiently anticipated by ordinary persons skilled in the art without an additional experiment. And, it is expected that an electrode for a fuel cell including an ionomer wall or plural ionomer pillars according to the present invention can improve contact with an electrolyte membrane or a gas diffusion layer.

If the height of the ionomer wall or pillar is smaller than the thickness of the catalyst layer, when an ink is sprayed onto an electrolyte membrane, ionomer portion forming inkdrops may be sprayed onto a certain spot until the ionomer wall or pillar has a required height, and then catalyst portion forming inkdrops may be sprayed onto the same spot that the ionomer portion forming inkdrops were sprayed until the catalyst layer has a preset thickness. Alternatively, if the height of the ionomer wall or pillar is smaller than the thickness of the catalyst layer, when an ink is sprayed onto a gas diffusion layer, catalyst portion forming inkdrops may be sprayed onto a certain spot and then ionomer portion forming inkdrops may be sprayed onto the same spot that the catalyst portion forming inkdrops were sprayed until the ionomer wall or pillar has a required height. Thereby a catalyst layer of a preset thickness can be formed.

And, in the case that inkdrops are sprayed by an ink jet method according to the present invention, the inkdrops may be sprayed while heating to promote drying of the sprayed inkdrops.

The above-mentioned catalyst layer for a fuel cell according to the present invention are formed on an electrolyte membrane or a gas diffusion layer, and may be used to manufacture a membrane electrode assembly for a fuel cell.

As shown in FIG. 2, a membrane electrode assembly for a fuel cell according to the present invention includes an electrolyte membrane 201; and an anode electrode and a cathode electrode located at opposite sides of the electrolyte membrane 201. The anode and cathode electrodes each may include a gas diffusion layer 208 and catalyst layers 203 and 205. The gas diffusion layer 208 for a fuel cell according to the present invention may include substrates 209a and 209b and microporous layers 207a and 207b formed on one side of the substrates 209a and 209b, respectively.

The electrolyte membrane may be an electrolyte membrane used in the art, for example any one polymer selected from the group consisting of perfluorosulfonic acid polymer, hydrocarbon-based polymer, polyimide, polyvinylidene fluoride, polyethersulfone, polyphenylene sulfide, polyphenylene oxide, polyphosphazene, polyethylene naphthalate, polyester, doped polybenzimidazol, polyether ketone, polysulfone, and their acids and bases, however the present invention is not limited in this regard.

The gas diffusion layer may be a gas diffusion layer used in the art, and typically may include a conductive substrate made of any one selected from the group consisting of carbon paper, carbon cloth and carbon felt. The gas diffusion layer may further include a microporous layer formed on one side of the conductive substrate, and the microporous layer may be made of a carbon-based material and a fluorine-based resin.

The carbon-based material of the present invention may be at least one selected from the group consisting of graphite, carbon black, acetylene black, denka black, ketjen black, activated carbon, mesoporous carbon, carbon nanotube, carbon nano fiber, carbon nano horn, carbon nano ring, carbon nano wire, fullerene (C60) and SuperP, however the present invention is not limited in this regard.

The fluorine-based resin may be at least one selected from the group consisting of polytetrafluoroethylene, polyvinylidene fluoride (PVdF), polyvinyl alcohol, cellulose acetate, polyvinylidene fluoride-hexafluoropropylene copolymer (PVdF-HFP) and styrene-butadiene rubber (SBR), however the present invention is not limited in this regard.

At this time, the catalyst layer is formed on the microporous layer of the gas diffusion layer.

The present invention also provides a fuel cell including the membrane electrode assembly of the present invention. FIG. 7 is a view illustrating schematically a fuel cell according to an embodiment of the present invention. Referring to FIG. 7, the fuel cell of the present invention includes a stack 200, a fuel providing unit 400 and an oxidant providing unit 300.

The stack 200 includes at least one membrane electrode assembly of the present invention, and in the case that at least two membrane electrode assemblies are included, the stack 200 includes a separator interposed between the membrane electrode assemblies. The separator prevents the membrane electrode assemblies from being electrically connected to each other, and transfers a fuel and an oxidant provided from the external to the membrane electrode assemblies.

The fuel providing unit 400 provides a fuel to the stack 200, and may include a fuel tank 410 for storing a fuel and a pump 420 for providing the fuel stored in the fuel tank 410 to the stack 200. The fuel may be gaseous or liquid hydrogen or hydrocarbon fuel, and the hydrocarbon fuel may be, for example methanol, ethanol, propanol, butanol or natural gas.

The oxidant providing unit 300 provides an oxidant to the stack 200. The oxidant is typically oxygen, and the oxidant providing unit 300 may be a pump for injecting oxygen or air.

### [Industrial Applicability]

The electrode for a fuel cell according to the present invention has excellent ion conductivity in an electrode layer and the remarkably improved reaction surface area to improve the performance of the fuel cell. And, contact between an electrolyte membrane and the electrode layer is improved to enhance durability.

## Claims

1. An electrode for a fuel cell which is interposed between an electrolyte membrane (201) and a separator having a fluid channel, the electrode comprising:
a catalyst layer (203, 205) contacted with the electrolyte membrane (201); and
a gas diffusion layer (208) contacted with the separator,
wherein the catalyst layer (203, 205) includes a catalyst portion (21) containing a plurality of first catalyst particles dispersed in an ionomer binder resin; and an ionomer portion (22) which has an ionomer binder resin,
wherein the ionomer portion has a shape of a wall or plural pillars (22) in the catalyst portion (21) and a height of the ionomer wall or pillars (22) is smaller than a thickness of the catalyst layer (203, 205), **characterized in that** the ionomer portion has a zero concentration of catalyst particles and the ionomer portion wall or pillars (22) are formed in a grid pattern, wherein the catalyst portion (21) is formed between grids.

2. The electrode for a fuel cell composition according to claim 1,
wherein the first catalyst particles are metal catalyst particles or metal catalyst particles on a carbon-based support.

3. A method of preparing an electrode for a fuel cell, the electrode comprising a catalyst layer (203, 205) that includes a catalyst portion (21) containing a plurality of first catalyst particles dispersed in an ionomer binder resin; and an ionomer portion (22) which has an ionomer binder resin, the method comprising:
(S1) preparing a catalyst portion forming ink (11) and an ionomer portion forming ink (12);
(S2) spraying the prepared first catalyst portion forming inkdrops and first ionomer portion forming inkdrops onto preset locations of an electrolyte membrane (201) or a gas diffusion layer (208) in an ink jet manner to form a layer; and
(S3) stacking second catalyst portion forming inkdrops and second ionomer portion forming inkdrops onto the locations where the first catalyst portion forming inkdrops and the first ionomer portion forming inkdrops were sprayed to form a catalyst portion (21) and an ionomer portion (22), respectively, and spraying repeatedly each of the second catalyst portion forming inkdrops and the second ionomer portion forming inkdrops in an ink jet manner to form a catalyst layer (203, 205) such that the ionomer portion has a shape of a wall or plural pillars (22) in the catalyst portion (21) and a height of the ionomer wall or pillars (22) is smaller than a thickness of the catalyst layer, **characterized in that** the ionomer portion has a zero concentration of catalyst particles and the ionomer portion wall or pillars (22) are formed in a grid pattern, wherein the catalyst portion (21) is formed between grids.

4. The method of preparing an electrode for a fuel cell according to claim 3, wherein the catalyst portion forming ink (11) includes a metal catalyst or a metal catalyst on a carbon-based support; a polymer ionomer; and a solvent.

5. The method of preparing an electrode for a fuel cell according to claim 3, wherein the ionomer portion forming ink (12) includes a polymer ionomer; and a solvent.

6. The method of preparing an electrode for a fuel cell according to claim 3, wherein the inkdrops are sprayed while heating.

7. The method of preparing an electrode for a fuel cell according to claim 3, wherein the electrolyte membrane (201) is any one polymer selected from the group consisting of perfluorosulfonic acid polymer, hydrocarbon-based polymer, polyimide, polyvinylidene fluoride, polyethersulfone, polyphenylene sulfide, polyphenylene oxide, polyphosphazene, polyethylene naphthalate, polyester, doped polybenzimidazol, polyether ketone, polysulfone, and their acids and bases.

8. The method of preparing an electrode for a fuel cell according to claim 3, wherein the gas diffusion layer (208) includes a conductive substrate selected from the group consisting of carbon paper, carbon cloth and carbon felt, a carbon-based material and a fluorine-based resin.

9. A membrane electrode assembly for a fuel cell, comprising:
an electrolyte membrane (201); and
an anode electrode and a cathode electrode formed at opposite sides of the electrolyte membrane (201), each including a catalyst layer (203, 205) and a gas diffusion layer (208),
wherein either the anode electrode or the cathode electrode, or both of the electrodes is the electrode for a fuel cell defined in any one of claims 1 or 2.

10. A fuel cell, comprising:
a stack (200) including at least one membrane electrode assembly defined in claim 9 and a separator interposed between the membrane electrode assemblies;
a fuel providing unit (400) for providing a fuel to the stack; and
an oxidant providing unit (300) for providing an oxidant to the stack.

## Patentansprüche

1. Elektrode für eine Brennstoffzelle, die zwischen einer Elektrolytmembran (201) und einem Separator, der einen Fluidkanal hat, eingefügt ist, die Elektrode umfassend:
eine Katalysatorschicht (203, 205) in Kontakt mit der Elektrolytmembran (201); und
eine Gasdiffusionsschicht (208) in Kontakt mit dem Separator,
wobei die Katalysatorschicht (203, 205) einen Katalysatorteil (21) umfasst, der eine Vielzahl an ersten Katalysatorpartikeln, die in einem Ionomerbinderharz dispergiert sind; und einen Ionomerteil (22), der ein Ionomerbinderharz hat, umfasst,
wobei der Ionomerteil eine Form einer Wand oder einer Vielzahl von Säulen (22) in dem Katalysatorteil (21) hat und eine Höhe der Ionomerwand oder Säulen (22) kleiner ist als eine Dicke der Katalysatorschicht (203, 205), **dadurch gekennzeichnet, dass** der Ionomerteil eine Null-Konzentration der Katalysatorpartikel hat und die Ionomerteilwand oder Säulen (22) in einem Gittermuster gebildet sind, wobei der Katalyastorteil (21) zwischen den Gittern gebildet ist.

2. Elektrode für eine Brennstoffzellenzusammensetzung nach Anspruch 1, wobei die ersten Katalysatorpartikel Metallkatalysatorpartikel oder Metallkatalysatorpartikel auf einem Kohlenstoff-basierten Träger sind.

3. Verfahren zur Herstellung einer Elektrode für eine Brennstoffzelle, wobei die Elektrode eine Katalysatorschicht (203, 205) umfasst, die einen Katalysatorteil (21) umfasst, der eine Vielzahl von ersten Katalysatorpartikeln, die in einem Ionomerbinderharz dispergiert sind; und einen Ionomerteil (22), der ein Ionomerbinderharz hat, umfasst, das Verfahren umfassend:
(S1) Herstellen einer Katalysatorteil-bildenden Tinte (11) und einer Ionomerteil-bildenden Tinte (12);
(S2) Sprühen der hergestellten ersten Katalyatorteil-bildenden Tintentropfen und ersten Ionomerteil-bildenden Tintentropfen auf voreingestellte Positionen einer Elektrolytmembran (201) oder einer Gasdiffusionsschicht (208) in Tintenstrahlart, um eine Schicht zu bilden; und
(S3) Stapeln zweiter Katalysatorteil-bildenden Tintentropfen und zweiter Ionomerteil-bildenden Tintentropfen auf die Positionen, auf die die ersten Katalysatorteil-bildenden Tintentropfen und die ersten Ionomerteil-bildenden Tintentropfen gesprüht wurden, um jeweils eine Katalysatorschicht (21) und einen Ionomerteil (22) zu bilden, und wiederholtes Sprühen jeder der zweiten Katalysatorschicht-bildenden Tintentropfen und der zweiten Ionomerteil-bildenden Tintentropfen in Tintenstrahlart, um eine Katalysatorschicht (203, 205) zu bilden, so dass der Ionomerteil eine Form einer Wand oder einer Vielzahl von Säulen (22) in dem Katalysatorteil (21) hat und eine Höhe der Ionomerwand oder Säulen (22) kleiner ist als eine Dicke der Katalysatorschicht, **dadurch gekennzeichnet, dass** der Ionomerteil eine Null-Konzentration an Katalysatorpartikeln hat und die Ionomerteilwand oder Säulen (22) in einem Gittermuster gebildet ist, wobei der Katalysatorteil (21) zwischen den Gittern gebildet ist.

4. Verfahren zur Herstellung einer Elektrode für eine Brennstoffzelle nach Anspruch 3, wobei die Katalysatorteil-bildende Tinte (11) einen Metallkatalysator oder einen Metallkatalysator auf einem Kohlenstoff-basierten Träger, ein Polymerionomer und ein Lösungsmittel umfasst.

5. Verfahren zur Herstellung einer Elektrode für eine Brennstoffzelle nach Anspruch 3, wobei die Ionomerteil-bildende Tinte (12) ein Polymerionomer und ein Lösungsmittel umfasst.

6. Verfahren zur Herstellung einer Elektrode für eine Brennstoffzelle nach Anspruch 3, wobei die Tintentropfen während eines Erhitzens gesprüht werden.

7. Verfahren zur Herstellung einer Elektrode für eine Brennstoffzelle nach Anspruch 3, wobei die Elektrolytmembran (201) ein Polymer ist, ausgewählt aus der Gruppe, bestehend aus Perfluorsulfonsäurepolymer, Kohlenwasserstoff-basiertes Polymer, Polyimid, Polyvinylidenfluorid, Polyethersulfon, Polyphenylensulfid, Polyphenylenoxid, Polyphosphazen, Polyethylennaphthalat, Polyester, dotiertes Polybenzimidazol, Polyetherketon, Polysulfon und deren Säuren und Basen.

8. Verfahren zur Herstellung einer Elektrode für eine Brennstoffzelle nach Anspruch 3, wobei die Gasdiffusionsschicht (208) ein leitfähiges Substrat umfasst, das ausgewählt ist aus der Gruppe, bestehend aus Kohlepapier, Kohletuch und Kohlenstoff-Filz, einem Kohlenstoff-basierten Material und einem Fluor-basierten Harz.

9. Membranelektrodenanordnung für eine Brennstoffzelle, umfassend:
eine Elektrolytmembran (201); und
eine Anodenelektrode und eine Katodenelektrode, die auf gegenüberliegenden Seiten der Elektrolytmembran (201) gebildet sind, die jeweils eine Katalysatorschicht (203, 205) und eine Gasdiffusionsschicht (208) umfassen,
wobei entweder die Anodenelektrode oder Katodenelektrode oder beide der Elektroden die Elektrode für eine Brennstoffzelle, wie in einem der Ansprüche 1 oder 2 definiert, ist.

10. Brennstoffzelle, umfassend:
einen Stapel (200), der zumindest eine Membranelektrodenanordnung, wie in Anspruch 9 definiert, und einen Separator, der zwischen den Membranelektrodenanordnungen eingefügt ist, umfasst;
eine Brennstoffbereitstellungseinheit (400) zur Bereitstellung eines Brennstoffes für den Stapel; und
eine Oxidationsmittel-Bereitstellungseinheit (300) zur Bereitstellung eines Oxidationsmittels für den Stapel.

## Revendications

1. Électrode pour une pile à combustible qui est interposée entre une membrane d'électrolyte (201) et un séparateur ayant un canal à fluide, cette électrode comprenant :
une couche de catalyseur (203, 205) en contact avec la membrane d'électrolyte (201) ; et
une couche de diffusion de gaz (208) en contact avec le séparateur,
dans laquelle la couche de catalyseur (203, 205) comprend une partie catalyseur (21) contenant une pluralité de premières particules de catalyseur dispersées dans une résine liante ionomère ; et une partie ionomère (22) qui a une résine liante ionomère,
dans laquelle la partie ionomère a la forme d'une paroi ou d'une pluralité de piliers (22) dans la partie catalyseur (21) et une hauteur de la paroi ou des piliers d'ionomère (22) est plus petite qu'une épaisseur de la couche de catalyseur (203, 205), **caractérisée en ce que** la partie ionomètre a une concentration nulle de particules de catalyseur et la paroi ou les piliers de la partie ionomère (22) sont formés dans un motif de grille, la partie catalyseur (21) étant formée entre les grilles.

2. Électrode pour une cellule à combustible selon la revendication 1,
dans laquelle les premières particules de catalyseur sont des particules de catalyseur métalliques ou des particules de catalyseur métalliques sur un support à base de carbone.

3. Procédé de préparation d'une électrode pour une pile à combustible, cette électrode comprenant une couche de catalyseur (203, 205) qui comprend une partie catalyseur (21) contenant une pluralité de premières particules de catalyseur dispersées dans une résine liante ionomère ; et une partie ionomère (22) qui a une résine liante ionomère, ce procédé comprenant :
(S1) la préparation d'une encre formant la partie catalyseur (11) et d'une encre formant la partie ionomère (12) ;
(S2) la pulvérisation des premières gouttes d'encre de formation de partie catalyseur et des premières gouttes d'encre de formation de partie ionomère préparées sur des emplacements prédéterminés d'une membrane d'électrolyte (201) ou d'une couche de diffusion de gaz (208) à la manière d'un jet d'encre de façon à former une couche ; et
(S3) l'empilement des deuxièmes gouttes d'encre de formation de partie catalyseur et des deuxièmes gouttes d'encre de formation de partie ionomère sur les emplacements où les gouttes d'encre de formation de première partie catalyseur et les gouttes d'encre de formation de première partie ionomère ont été pulvérisées pour former une partie catalyseur (21) et une partie ionomère (22), respectivement, et la pulvérisation répétée de chacune des gouttes d'eau de formation de deuxième partie catalyseur et des gouttes d'eau de formation de deuxième partie ionomère à la manière d'un jet d'encre afin de former une couche de catalyseur (203, 205) de manière à ce que la partie ionomère ait la forme d'une paroi ou d'une pluralité de piliers (22) dans la partie catalyseur (21) et une hauteur de la paroi ou des piliers d'ionomère (22) soit plus petite que l'épaisseur de la couche de catalyseur, **caractérisé en ce que** la partie ionomère a une concentration nulle de particules de catalyseur et la paroi ou les piliers (22) de la partie ionomère sont formés dans un motif de grille, la partie catalyseur (21) étant formée entre les grilles.

4. Procédé de préparation d'une électrode pour une pile à combustible selon la revendication 3,
dans lequel l'encre de formation de la partie catalyseur (11) comprend un catalyseur métallique ou un catalyseur métallique sur un support à base de carbone ; un ionomère polymère ; et un solvant.

5. Procédé de préparation d'une électrode pour une pile à combustible selon la revendication 3,
dans lequel l'encre de formation de la partie ionomère (12) comprend un ionomère polymère ; et un solvant.

6. Procédé de préparation d'une électrode pour une pile à combustible selon la revendication 3,
dans lequel les gouttes d'encre sont pulvérisées tout en étant chauffées.

7. Procédé de préparation d'une électrode pour une pile à combustible selon la revendication 3,
dans lequel la membrane d'électrolyte (201) est un polymère quelconque choisi parmi le groupe comprenant le polymère acide perfluorosulfonique, le polymère à base d'hydrocarbure, le polyimide, le fluorure de polyvinylidène, le polyéthersulfone, le sulfure de polyphénylène, l'oxyde de polyphénylène, le polyphosphazène, le naphtalate de polyéthylène, le polyester, le polybenzimidazol dopé, le cétone de polyéther, le polysulfone et leurs acides et bases.

8. Procédé de préparation d'une électrode pour une pile à combustible selon la revendication 3,
dans lequel la couche de diffusion de gaz (208) comprend un substrat conducteur choisi parmi le groupe comprenant le papier carbone, la fibre de carbone et le feutre de carbone, un matériau à base de carbone et une résine à base de fluorine.

9. Ensemble électrode à membrane pour une pile à combustible, comprenant :
une membrane d'électrolyte (201) ; et
une électrode anode et une électrode cathode formées sur des côtés opposés de la membrane d'électrolyte (201), comprenant chacune une couche de catalyseur (203, 205) et une couche de diffusion de gaz (208),
dans lequel soit l'électrode anode, soit l'électrode cathode, soit les deux électrodes sont l'électrode pour une pile à combustible selon l'une quelconque des revendications 1 ou 2.

10. Pile à combustible comprenant :
un empilement (200) comprenant au moins un ensemble électrode à membrane selon la revendication 9 et un séparateur interposé entre les ensembles électrodes à membrane ;
une unité de fourniture de combustible (400) pour fournir un combustible à l'empilement ; et
une unité de fourniture d'oxydant (300) pour fournir un oxydant à l'empilement.
